# EUROPEAN PATENT APPLICATION

(11) **EP 1 885 155 A1**
(43) Date of publication of application: **06.02.2008**
(21) Application number: 06746840.5
(22) Date of filing: 25.05.2006
(51) Int. Cl.: H04R 5/027, H04M 1/02, H04M 1/03, H04R 1/02, H04R 19/01

(54) **PORTABLE ELECTRONIC APPARATUS WITH MICROPHONES**

(30) Priority: 27.05.2005 JP 2005155868
(71) Applicant: HOSIDEN CORPORATION, Yao-shi, Osaka 581-0071 (JP)
(72) Inventor: IZUCHI, Toshiro, c/o HOSIDEN KYUSHU CORPORATION, Kurate-gun, Fukuoka 807-1312 (JP); NAKANISHI, Kensuke, c/o HOSIDEN KYUSHU CORPORATION, Kurate-gun, Fukuoka 807-1312 (JP); AWAMURA, Ryuji, c/o HOSIDEN KYUSHU CORPORATION, Kurate-gun, Fukuoka 807-1312 (JP)
(74) Representative: Hoffmann, Eckart
(86) International application number: PCT/JP2006/310461
(87) International publication number: WO 2006/126641

(57) **Abstract**

Two microphone assemblies 3 each having a main sound hole 61M and an auxiliary sound hole 61S are placed at a distance from each other facing the same direction, the main sound hole 61M being offset to one side with respect to an axis of an electret condenser microphone 4 and communicated with a rear face 4B of the electret condenser microphone 4 and the auxiliary sound hole 61 S being offset to the opposite side of the axis of the electret condenser microphone 4 from the main sound hole 61M. The auxiliary sound holes 61 S are provided in one face 1F of a housing 10 and the main sound holes 61M are provided in other faces 1R and 1L continuous with the face 1F of the housing 10. Directional axes extending from the respective auxiliary sound holes 61S to the respective main sound holes 61 M are separated from each other at an angle.

## Description

### TECHNICAL FIELD

The present invention relates to a portable electronic apparatus equipped with microphones used for audio stereo input, for example, when using a cell phone as a movie recording apparatus or videophone or when using a personal computer equipped with built-in microphones as a videoconferencing system by mounting a camera on it.

### BACKGROUND ART

Recently, so-called portable electronic apparatus including information communication apparatus such as cell phones and PDAs (Personal Digital Assistants), personal computers, digital still cameras, digital video cameras, and toys have been equipped with a wide range of functions. If such portable electronic apparatus can be used as videophones or movie recording (shooting) apparatus they will have their usability further improved. If the videophones or movie recording (shooting) apparatus can output stereo sound, it will be effective in adding a sense of realism. To obtain stereo sound output, some apparatus are designed to produce pseudo stereo sound output by producing output from two speakers using monophonic sound input. However, this design, which outputs the same sound source through two speakers, is not sufficient compared to stereo sound output in which audio signals from, for example, two sound sources are outputted through two speakers.

On the other hand, Patent literature 1 discloses a cell phone terminal equipped with two microphones, which are used for stereo sound input. However, Patent literature 1 does not mention how to provide high-sensitivity stereo sound with excellent stereo effect or how to incorporate microphones stably without interference with other parts amid a trend toward downsizing of portable electronic apparatus.
On the other hand, Patent literature 2 discloses a design which orients high directional characteristics of a microphone of a portable terminal toward a sound source and describes how to obtain a desired directivity axis using values of acoustic resistance and acoustic capacitance of the microphone itself and locations of sound holes in side and rear faces of a housing. Also, Patent literature 3 discloses how to change a directional axis which depends on location of a sound hole in a microphone holder according to changes in relative positional relationship between a voice source of a speaker and a sound hole in a casing of a cell phone resulting from changes in total length of the casing.
Patent literature 1: Japanese Patent Application Laid Open No. 2004-056408
Patent literature 2: Japanese Patent Application Laid Open No. 2002-135880
Patent literature 3: Japanese Patent No. 3479466

### DISCLOSURE OF THE INVENTION

### PROBLEMS TO BE SOLVED BY THE INVENTION

However, Patent literatures 1, 2, and 3 only disclose outlines of fragmentary techniques for using two microphones, obtaining a desired directivity axis based on the locations of sound holes in a housing, or changing a directional axis according to the total length of a casing rather than a comprehensive technique for stably placing two microphones for stereo sound without interference with other parts and effectively providing high-sensitivity stereo sound with excellent stereo effect.

### MEANS TO SOLVE THE PROBLEMS

An object of the present invention is to provide a portable electronic apparatus which acquires voices of subjects efficiently with high sensitivity using a camera of a movie recording apparatus, videophone, or videoconferencing system by placing two microphones stably without interference with other parts.
A portable electronic apparatus with microphones according to the present invention comprises:
a housing;
two microphone storage parts formed inside, near opposite flanks of the housing; and
two microphone assemblies stored in the two microphone storage parts and each made up of an electret condenser microphone with a diaphragm,
wherein space in front of the diaphragms of the two microphone assemblies is communicated with front sound holes opening in a front face of the housing while space behind the diaphragms of the two microphone assemblies is communicated with two lateral sound holes opening, respectively, in the two opposite flanks of the housing, and locations of the front sound holes and the lateral sound holes relative to the microphone assemblies define respective directional axes of the microphone assemblies.

### EFFECTS OF THE INVENTION

By placing two identical microphone assemblies away from each other in such a way as to spread apart the directional axes formed by the lateral sound holes and front sound holes, the present invention can efficiently provide high-sensitivity stereo sound, with the microphone assemblies housed in corners of the housing of the portable electronic apparatus stably without interference with other parts.

### BRIEF DESCRIPTION OF THE DRAWINGS

Fig. 1 is a partially exploded block diagram showing a first embodiment of the present invention;
Fig. 2A is an exploded block diagram of a microphone assembly;
Fig. 2B is an exploded block diagram of a microphone;
Fig. 2C is an exploded view of the microphone;
Fig. 2D is an exploded view of a microphone of a different configuration;
Fig. 3A is a sectional view of a microphone assembly placed in a housing;
Fig. 3B is a sectional view of a microphone assembly of a different configuration placed in the housing;
Fig. 3C is a sectional view of a microphone assembly of another configuration placed in the housing;
Fig. 4 is a diagram for illustrating directional axes;
Fig. 5 is a diagram for illustrating directional axes and stability;
Fig. 6A is an explanatory diagram illustrating a case in which an angle between two directional axes is increased;
Fig. 6B is an explanatory diagram illustrating a case in which the angle between the two directional axes is decreased;
Fig. 7A is a diagram showing an example of increasing an angle between adjustable directional axes according to a second embodiment;
Fig. 7B is a diagram showing an example of decreasing the angle between the adjustable directional axes according to the second embodiment;
Fig. 7C is a diagram showing another example of increasing the angle between the adjustable directional axes according to the second embodiment;
Fig. 7D is a diagram showing another example of decreasing the angle between the adjustable directional axes according to the second embodiment;
Fig. 8A is a diagram for illustrating a concrete example of directional axes as a housing 100 is viewed from the front;
Fig. 8B is a diagram showing microphone storage parts 11 and microphone assemblies 3 in the housing 100 shown in Fig. 8A;
Fig. 8C is a diagram showing a state in which the angle between the directional axes has been decreased by a directional axis adjustment mechanism;
Fig. 8D is a diagram showing a state in which the angle between the directional axes has been increased by the directional axis adjustment mechanism;
Fig. 8E is a diagram showing a relationship between sound holes 12 and slide plate holes 90 when the angle between the directional axes is decreased;
Fig. 8F is a diagram showing a relationship between the sound holes 12 and slide plate holes 90 when the angle between the directional axes is increased;
Fig. 9A is a diagram for illustrating how microphone assemblies are used for noise cancelling during a telephone conversation in a third embodiment;
Fig. 9B is a diagram for illustrating how the microphone assemblies are used to collect acoustic signals in the third embodiment;
Fig. 10 is a simplified circuit diagram of a noise canceller;
Fig. 11A is a diagram for illustrating a case in which two microphones of microphone assemblies are operated for stereophonic sound collection;
Fig. 11B is a diagram for illustrating a case in which only one of the microphones is operated for monophonic sound collection; and
Fig. 12 is a diagram showing a simplified circuit which switches one of the microphones between operation and non-operation.

### BEST MODES FOR CARRYING OUT THE INVENTION

Now, embodiments of a portable electronic apparatus according to the present invention will be described with reference to the drawings.

### [First Embodiment]

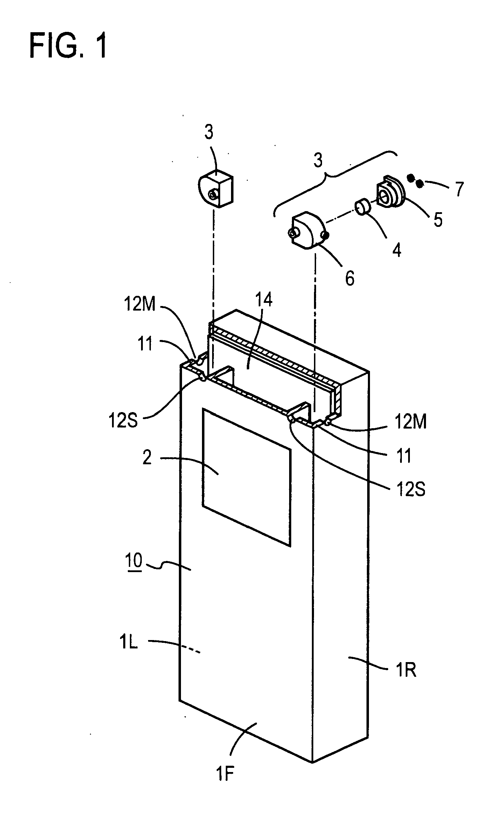

Fig. 1 shows a cell phone as an example of a portable electronic apparatus, with a housing of the cell phone broken away at an upper front end. Looking at an approximately rectangular housing 10 of the cell phone in Fig. 1, microphone storage parts 11 are formed on both sides at an upper end of a front face 1F on which a display 2 is mounted, to house microphone assemblies 3 in the housing 10. The microphone storage parts 11 is formed by the housing 10 itself and part of a substrate 14 which is located in rear part. Front sound holes 12S and lateral sound holes 12M which are through-holes are formed, respectively, in the front face 1F and side faces 1L and 1R of the microphone storage parts 11 (housing 10).
As shown by the exploded perspective view in Fig. 1, each of the microphone assemblies 3 housed in the microphone storage parts 11 has a holder 6 which houses an electret condenser microphone (hereinafter referred to simply as a microphone) 4 and a rubber piece 5 which covers it. The rubber piece 5 is equipped with a connection terminal constituted of a coil spring 7. The connection terminal may be constituted of a rubber contact, leaf spring, flexible substrate, or lead wire instead of the coil spring 7. The holder 6 is made of resin, soft resin, rubber, or other material.

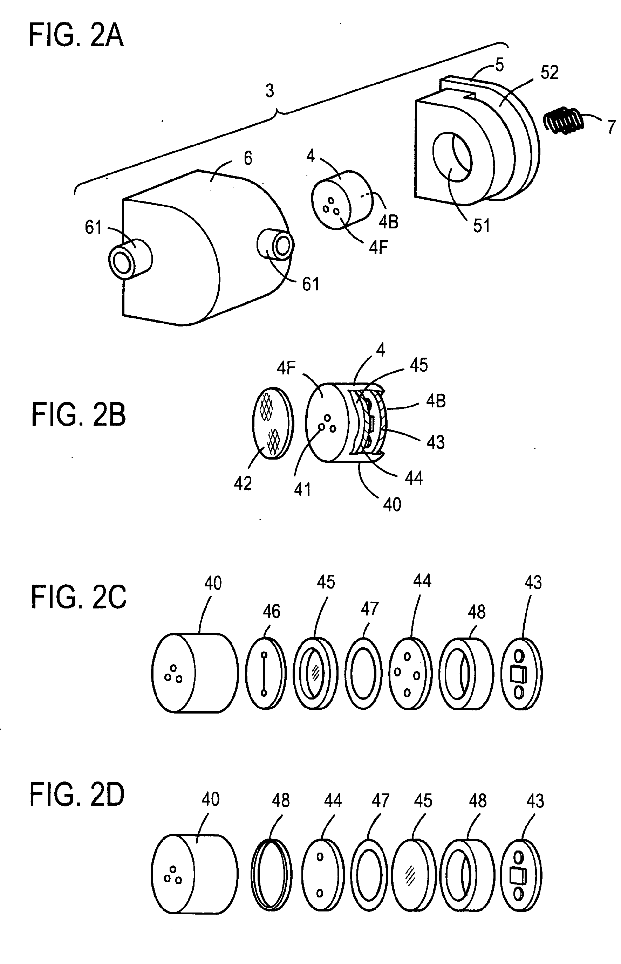

Fig. 2A is an exploded view of the microphone assembly 3 shown in Fig. 1 while Fig. 2B is a partial sectional view of the microphone 4 in the microphone assembly 3. In Fig. 2A, the holder 6 of the microphone assembly 3 has two sound-hole stubs 61 to be inserted in the front sound hole 12S and the lateral sound hole 12M formed in the front face 1F and side face 1L (or 1R) of the microphone storage part 11. The holder 6 is sized to fit in the microphone storage part 11. The rubber piece 5 fitted in the holder 6 has a gap (not shown) which communicates that sound-hole stub 61 of the holder 6 which is located on the front face 1F of the microphone storage part 11 with a front face 4F of the microphone 4 when the microphone 4 is housed in a hole 51 in the rubber piece 5. Also, it has a recess 52 which communicates that sound-hole stub 61 of the holder 6 which is located on the side face 1L (or 1R) of the microphone storage part 11 with a rear face 4B of the microphone 4.

In the example of the microphone 4 shown in Fig. 2B, a sound hole 41 is formed in the front face 4F of a capsule 40 of the microphone 4 encased in a cover 42 with appropriate acoustic impedance. Sound holes are also formed in a substrate 43 on the rear face 4B and in a back plate 44. Thus, the microphone 4 is sensitive to sounds incident on its front face 4F and rear face 4B. Viewed in terms of sensitivity, the sensitivity (acoustic directivity) on the front face 4F and rear face 4B of the microphone 4 varies with magnitude of acoustic capacitance which depends on the acoustic impedance of acoustic members existing on the front side and rear side of a diaphragm 45 and size of an air chamber. Therefore, the microphone 4 can have, for example, low directivity on the front face 4F and high directivity on the rear face 4B. That is, if the microphone 4 itself has intermediate directional characteristics between omnidirectional and bidirectional characteristics, it can have low directivity on the front side and high directivity on the rear side. Thus, according to this embodiment, if the microphone 4 is contained in the gap of the rubber piece 5 in such a way that the front face 4F of the microphone 4 will be located on the side of the sound-hole stub 61 of the holder 6 located on the front face 1F of the microphone storage part 11 and that the rear face 4B of the microphone 4 will be located on the side of the recess 52 in the rubber piece 5, the low-directivity side of the microphone 4 can be placed on the side of the hole 51 in the rubber piece 5 while the high-directivity side of the microphone 4 can be placed on the side of the recess 52 in the rubber piece 5. The use of a microphone with such directivity decreases sensitivity to low frequencies, making it possible to reduce ambient noise.

Figs. 2C and 2D show examples of microphones 4 of different structures, i.e., layout examples of acoustic resistance members which affect sensitivity. Specifically, in the example shown in Fig. 2B, a cover 42 which is an acoustic resistance member is installed outside a microphone capsule 40. In the example shown in Fig. 2C, a plate 46 which is an acoustic resistance member is interposed between capsule 40 and diaphragm 45. In the example shown in Fig. 2D, a back plate 44 with adjusted acoustic resistance is used as an acoustic resistance member, being installed in the microphone. In the example shown in Fig. 2C, a capsule 40, diaphragm 45, back plate 44, and substrate 43 are arranged in order. It illustrates a so-called foil type in which an electret is applied to the diaphragm 45 or a back type in which an electret is applied to the back plate 44. The example shown in Fig. 2D illustrates a so-called reverse type in which the diaphragm 45 and back plate 44 in the example in Fig. 2C are interchanged. Incidentally, in Figs. 2C and 2D, reference numeral 47 denotes a spacer and 48 denotes a ring.

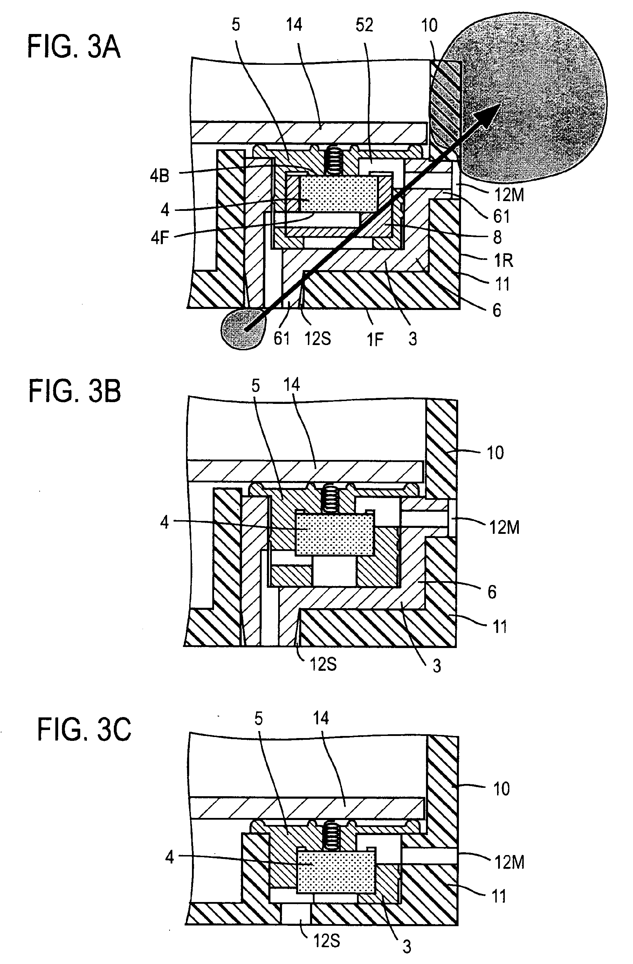

Figs. 3A, 3B and 3C show sectional views in which the microphone assembly 3 is placed in the microphone storage part 11 of the housing 10. In Fig. 3A, which shows a slightly different structure from the example in Fig. 2A, the microphone 4 is housed in a casing 8. Specifically, in Fig. 3A, the casing 8 which houses the microphone 4 is placed in a space in the rubber piece 5 while the rear face 4B of the microphone 4 faces the recess 52 in the rubber piece 5 and is communicated with that sound-hole stub 61 of the holder 6 which is located on the side face 1R of the housing. On the other hand, the front face 4F of the microphone 4 is communicated with that sound-hole stub 61 of the holder 6 which is located from a side face of the casing 8 to the front face 1F of the housing. With the holder 6 fitted in the microphone storage part 11, the sound-hole stubs 61 of the holder 6 are placed in the sound holes 12S and 12M of the housing 10 (microphone storage part 11).

The microphone 4 picks up sound through the sound holes 12M and 12S in the side face 1R and the front face 1F of the microphone storage part 11. In this case, the direction extending from the front sound hole 12S in the front face 1F of the microphone storage part 11 of the housing to the lateral sound hole 12M in the side face 1R of the microphone storage part 11 and represented by a thick arrow in the figure is referred to as a directional axis. With the microphone assembly 3, the sensitivity with which sound is picked up along the direction of the directional axis depends on the directional sensitivity of the microphone 4. An encircled area at an end of the directional axis in Fig. 3A represents a sensitivity area and has intermediate directional characteristics between omnidirectional and bidirectional characteristics as is the case with the directivity of the microphone 4. In the example of Fig. 3A, the sensitivity is extremely higher on the front face 1F of the housing 10 than on a rear face 1B of the housing 10.

In Fig. 3A, the microphone 4 is housed in the casing 8, which is housed in the rubber piece 5, which in turn is housed in the holder 6. Figs. 3B and 3C show other configuration examples of the microphone assembly 3, where Fig. 3B shows a structure similar to the structure in Fig. 2A except that the casing 8 has been omitted while Fig. 3C shows a structure in which the holder 6 has been omitted in addition. That is, Fig. 3B shows a structure in which the rubber piece 5 containing the microphone 4 is housed directly in the holder 6 while maintaining communicating paths running from the front face and rear face of the microphone 4 to the sound holes 12S and 12M in the front face and side face of the microphone storage part 11. In other words, the rubber piece 5 and the casing 8 in Fig. 3A are integrated into a single unit with the shape of the casing given to the rubber piece 5. Fig. 3C shows a structure in which the rubber piece 5 combining the role of the holder 6 in Fig. 3B can be housed and fixed in the microphone storage part 11. This makes it possible to eliminate the casing 8 or the holder 6, and thus reduce the number of parts.

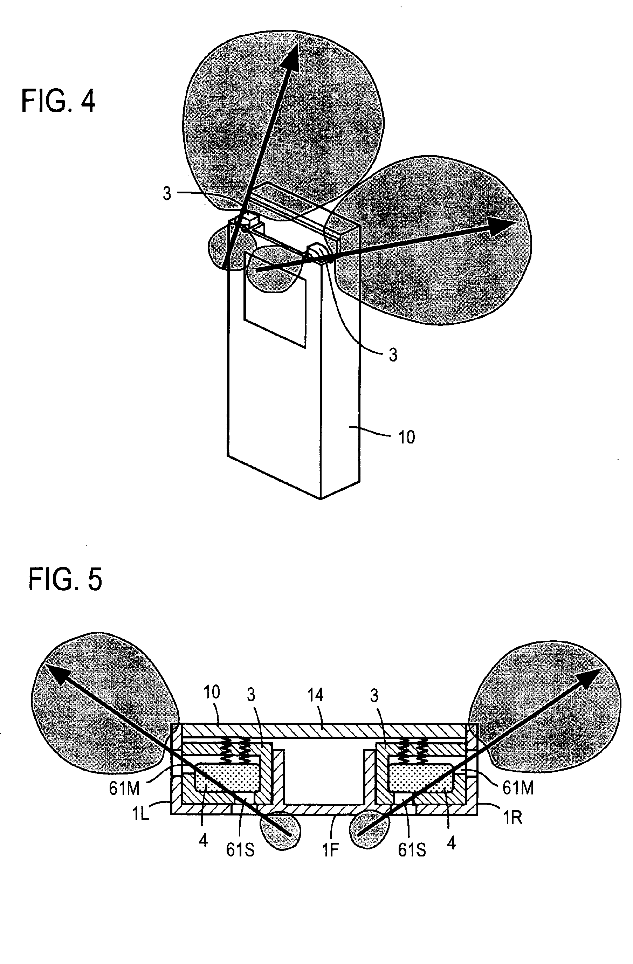

Fig. 4 shows directions of directional axes and sound sensitivities therein when the microphone assemblies 3 are installed in the upper left and right front corners of the housing 10 of the cell phone shown in Fig. 1. By laying out the microphone assemblies 3 in this way, it is possible to collect stereo sound behind the housing 10 with high sensitivity. For example, by picking up two sources of sound produced by subjects of a camera installed on the back face of the housing 10, it is possible to obtain stereo sound for movie recording, videophone, or the like efficiently with high sensitivity. Also, as shown in Fig. 3, the microphone assembly 3 can be placed stably in the microphone storage part 11 in the corner where the front face 1F and side face 1L (or 1R) of the housing 10 intersect, making it possible to maintain high sound-acquisition sensitivity along the direction of the directional axis. Since the two microphone assemblies 3 are installed in a small portable electronic apparatus such as a cell phone, preferably they are placed as far away from each other as possible. Also, it is preferable to install them in a horizontally symmetrical manner (or in a vertically symmetrical manner if viewed from a different angle) for the purpose of acquiring stereo sound.

Fig. 5 is a schematic diagram showing two microphone assemblies 3 placed with their directional axes spaced approximately 120 degrees apart. The two microphone assemblies 3 are placed in two corners of the housing 10. Although the angle between the directional axes each extending from a sound hole (referred to as an auxiliary sound hole) 61S on the front face 1F of the housing 10 of the holder 6 containing the microphone 4 to a sound hole (referred to as a main sound hole) 61M of the sound-hole stub 61 (not shown in Fig. 5) on the side face 1R (or 1L) of the housing 10 of the holder 6 is set at 120 degrees, since inclinations of the directional axes only depend on relative positions of the main sound hole 61M and auxiliary sound hole 61S, the holders 6 (the microphone assemblies 3) can be placed stably in corners of the housing 10 as shown in Fig. 5 regardless of the angle formed by the directional axes. This makes layout and wiring of the microphone assemblies 3 easier.

To acquire stereo sound using the two microphone assemblies 3, it is preferable that the angle between their directional axes is set to 120 degrees, but it may be set otherwise within a range of 120 ± 30 degrees. The angle between the directional axes may be varied depending on attributes and operation of the sound source from which sound is acquired or preferences of the user who listens to the stereo sound and listenability of the stereo sound. Generally, increasing the angle between the directional axes gives a sense of stereo, but increasing it too much will cause the phenomenon of so-called "hole effect," making it difficult to pick up sound in the center. However, a wide angle between the directional axes which will cause a hole effect may be used depending on an object or user preferences.

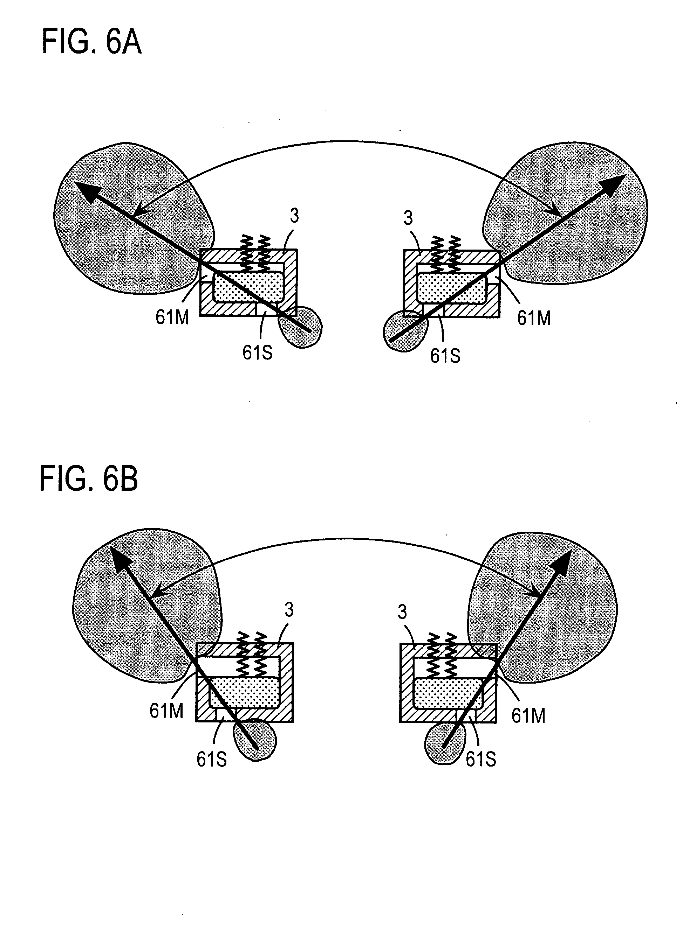

Figs. 6A and 6B show a case in which the angle between the directional axes is increased and a case in which the angle between the directional axes is decreased, respectively. The angle between the directional axes can be adjusted through adjustment of positional relationship between the main sound hole 6 1 M and auxiliary sound hole 61 S of each microphone assembly 3. To emphasize the angle between the directional axes, in Fig. 6A, the microphone assemblies 3 are flattened by reducing their depth and the auxiliary sound holes 61 S are moved away from the main sound holes 61 M in a direction parallel to the front face whereas in Fig. 6B, the depth of the microphone assemblies 3 is increased and the auxiliary sound holes 61S are brought close to the main sound holes 6 1 M in a direction parallel to the front face.

### [Second Embodiment]

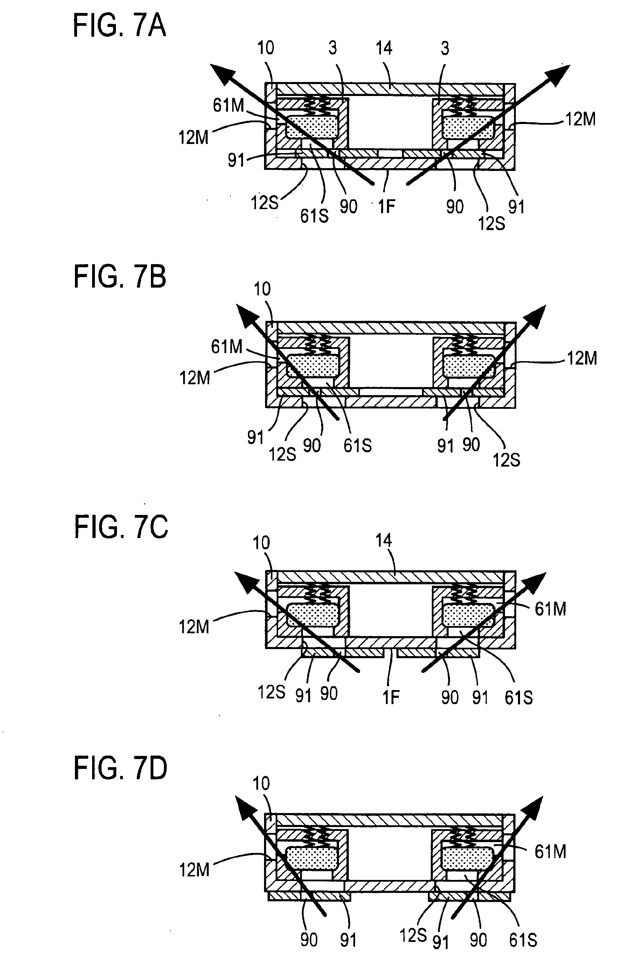

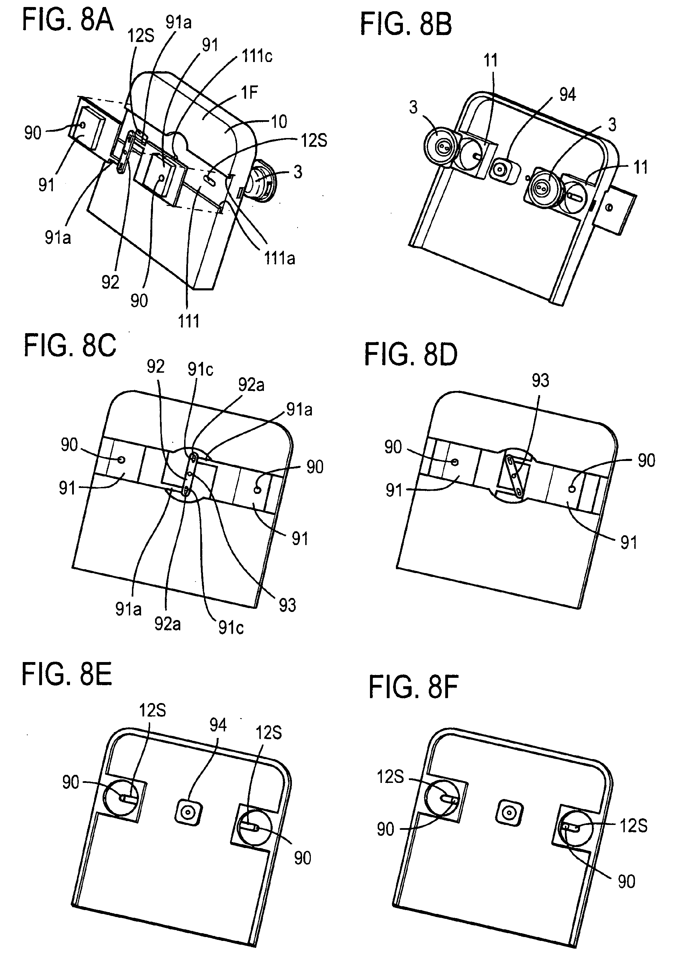

Whereas Figs. 6A and 6B show structures in which the angle between the directional axes is adjusted in advance according to the object from which sound is acquired or at the request of the user, Figs. 7A, 7B, and 8 show structures which allow the user to adjust the angle between the directional axes. Specifically, in Figs. 7A and 7B, two slide plates 91, each with a hole 90, are installed between the microphone assemblies 3 and the front face 1F of the housing 10. The two sound holes 12S in the front face are widened in the direction of a straight line connecting them. The width of the holes 90 in the slide plates 91 is equal to or less than half the width of the sound holes 12S in the front face. Sliding the slide plates 91 causes the holes 90 to move along the sound holes 12S, making it possible to move the positions of the sound holes in effect. This makes it possible to move the positions of the auxiliary sound holes 61 S relative to the positions of the main sound holes 61 M. In Fig. 7A, the slide plates 91 are brought close to each other, moving the auxiliary sound holes 61 S away from the main sound holes 61M to increase the angle between the directional axes while in Fig. 7B, the slide plates 91 are moved away from each other, bringing the auxiliary sound holes 61S close to the main sound holes 61 M to decrease the angle between the directional axes.

Figs. 7C and 7D show other variations of Figs. 7A and 7B. In Figs. 7C and 7D, two slide plates 91, each with a hole 90, are installed outside the front face 1F of the housing 10 and the positions of the auxiliary sound holes 61 S can be varied relative to the positions of the main sound holes 61 M. Fig. 7C shows how the two slide plates 91 are brought close to each other, moving the auxiliary sound holes 61S away from the main sound holes 61M to increase the angle between the directional axes while Fig. 7D shows how the two slide plates 91 are moved away from each other, bringing the auxiliary sound holes 61S close to the main sound holes 61M to decrease the angle between the directional axes.

Fig. 8 shows concrete examples of configuration examples shown in Figs. 7C and 7D, where Figs. 8A and 8B are exploded perspective views, Figs. 8C and 8E show how the slide plates 91 are moved away from each other, bringing the auxiliary sound holes close to the main sound holes to decrease the angle between the directional axes, and Figs. 8D and 8F show how the slide plates 91 are brought close to each other, moving the auxiliary sound holes away from the main sound holes to increase the angle between the directional axes.
In Fig. 8A, the two rectangular slide plates 91 are fitted in the front face 1F of the housing 10, and an elongated slide recess 111 is formed to allow the slide plates 91 to slide along. In the widthwise center of the slide recess 111, two sound holes 12S elongated in the lengthwise direction of the slide recess 111 are formed at longitudinal intervals. Guide grooves 111 a are formed in opposite side walls along the lengthwise direction of the slide recess 111 and two lateral edges of the slide plates 91 are slidably fitted in the guide grooves 111a. The slide plates 91 are fitted in the slide recess 111 in such a way that their short sides will face each other. Respective holes 90 are formed in the slide plates 91 in such a way as to overlap the elongated sound holes 12S when the slide plates 91 are mounted in the slide recess 111, so that the holes 90 will change communicating position of the sound holes 12S as the slide plates 91 slide over the housing 10.

As shown in Fig. 8C, arms 91a are formed at diagonally opposite ends of those short sides of the two slide plates 91 which face each other, extending toward each other in a direction parallel to the sliding direction. An engagement shaft 91 c perpendicular to the top face of the slide plate 91 is formed at the tip of each arm 91 a. A connecting rod 92 is installed to turnably connect the engagement shafts 91c of the two arms 91 a. Connecting holes 92a elongated in the lengthwise direction of the connecting rod are formed at both ends of the connecting rod, and the engagement shafts 91 c of the arms 91a are inserted into and engaged with them. A shaft 93 of a motor 94 (Fig. 8B) mounted on an inner wall of the housing 10 protrudes through a shaft hole 111c (Fig. 8A) formed in the center of the slide recess 111 of the housing 10 and is fastened to the center of the connecting rod 92. Thus, as the motor 94 is operated, the rotary shaft 93 turns, pushing or pulling the two arms 91a in opposite directions to move the two slide plates 91 away from or close to each other.

For example, when the shaft 93 is rotated clockwise by the motor 94, the slide plates 91 move away from each other and thereby place the holes 90 in the slide plates 91 away from each other at the outer ends of the respective front sound holes 12S formed in the housing 10 as shown in Figs. 8C and 8E. On the other hand, when the shaft 93 is rotated counterclockwise by the motor 94, the slide plates 91 come close to each other and thereby place the holes 90 in the slide plates 91 close to each other at the inner ends of the respective front sound holes 12S formed in the housing 10 as shown in Figs. 8D and 8F. Thus, in the state shown in 8C and 8E, the slide plates 91 are moved away from each other, bringing the auxiliary sound holes 61 S close to the main sound holes 6 1 M to decrease the angle between the directional axes as shown in Fig. 7D while in the state shown in Figs. 8D and 8F, the slide plates 91 are brought close to each other, moving the auxiliary sound holes 61S away from the main sound holes 61M to increase the angle between the directional axes as shown in Fig. 7C.
In this way, by operating the motor 94 in the forward or reverse direction, it is possible to change the positions of the auxiliary sound holes with respect to the main sound holes and thereby change the angles of the directional axes, making it possible to perform stereo movie recording to suit user's tastes or provide stereo sound easy for the party on the other end of the videophone to listen to.

### [Third Embodiment]

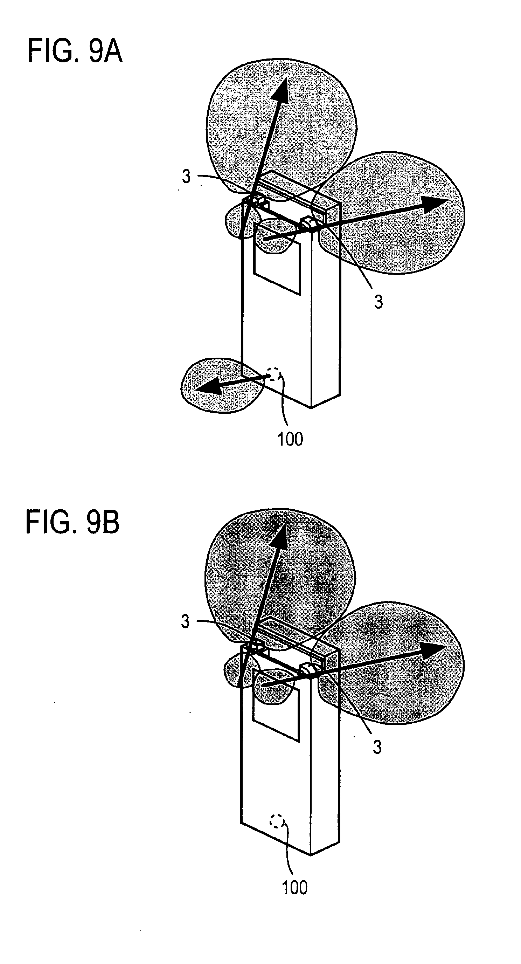

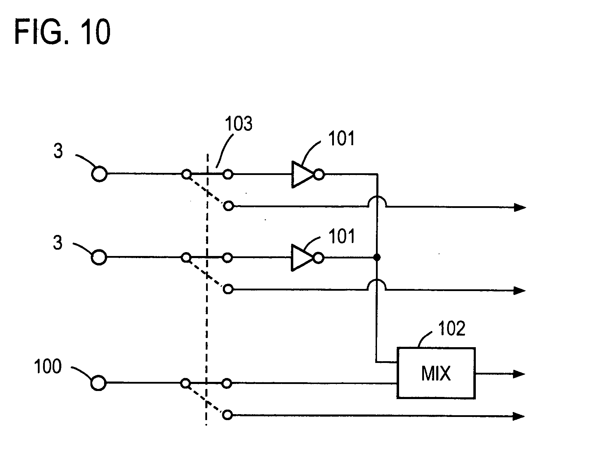

Whereas a method for obtaining stereo sound using two microphone assemblies has been described above, this embodiment has the effect of cutting noise coming from behind a cell phone using two microphone assemblies which provide stereo sound, as a noise canceller during a normal telephone conversation. Specifically, this embodiment has a microphone assembly 100 (indicated by a broken line) for normal telephone conversations as shown in Figs. 9A and 9B in addition to the two microphone assemblies 3 for stereo sound. For example, in movie shooting mode, the two microphone assemblies 3 for stereo sound is operated as shown in Fig. 9B while in normal call mode as shown in Fig. 9A, the two microphone assemblies 3 for stereo sound is used as a noise-cancelling sound collector, as required, to cut noise coming from behind the apparatus. Fig. 10 is a simplified circuit diagram of the noise canceller, where the two microphone assemblies 3 for stereo sound are connected to a mixer 102 via an inverter circuit 101 and the microphone assembly 100 for telephone conversations is connected directly to the mixer 102. The mixer 102, which functions as a noise cancelling means, cancels out noises from the microphone assemblies 3 and 100. A switch 103 is used to switch among noise cancelling operation, stereo operation, and normal call mode without noise cancelling.

### [Fourth Embodiment]

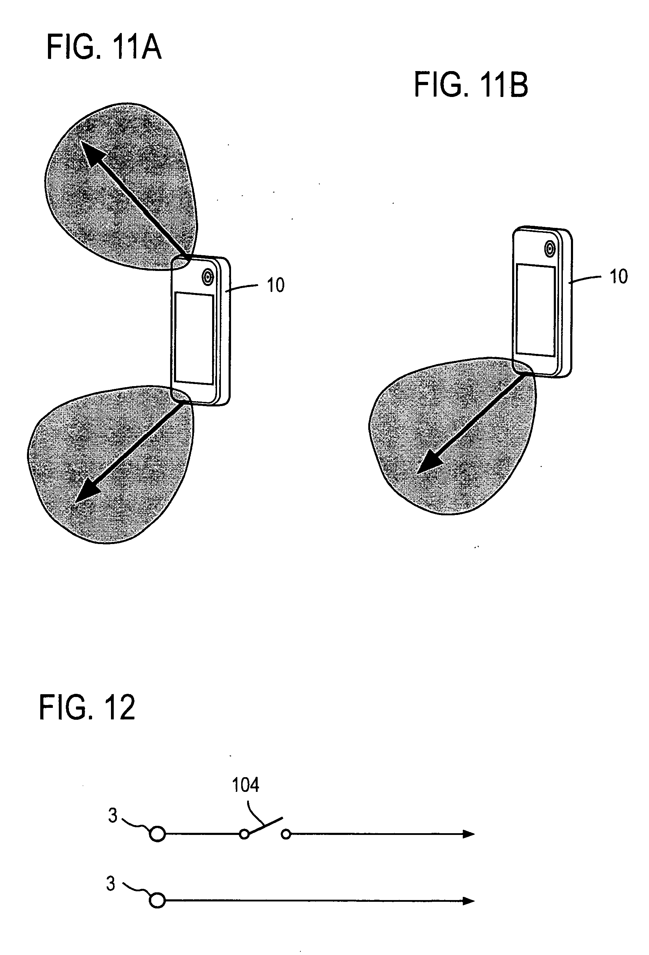

Fig. 11 shows two microphone assemblies for stereo sound: when a sound source is distant from an apparatus 1 shown in Fig. 11A, stereo sound input is captured and when a sound source is close to the apparatus 1 shown in Fig. 11B, monophonic sound input is captured using only one of the microphone assemblies without operating the other microphone assembly. By capturing nearby sound using only one of the microphone assemblies in this way, it is possible to make a phone call using the other microphone assembly. When using one of the microphone assemblies rather than stereo sound input, practically the other microphone assembly can be switched between operation and non-operation using a switch 104 which is a deactivating means, as shown in Fig. 12.

Although a cell phone has been cited as an example in the above description, in addition to cell phones, the present invention is also applicable to other portable electronic apparatus including information communication apparatus such as PDAs, personal computers, digital still cameras, digital video cameras, and toys.

## Claims

1. A portable electronic apparatus with microphones comprising:
a housing;
two microphone storage parts formed inside, near opposite flanks of the housing; and
two microphone assemblies stored in the two microphone storage parts and each made up of an electret condenser microphone with a diaphragm,
wherein space in front of the diaphragms of the two microphone assemblies is communicated with front sound holes opening in a front face of the housing while space behind the diaphragms of the two microphone assemblies is communicated with two lateral sound holes opening, respectively, in the two opposite flanks of the housing, and locations of the front sound holes and the lateral sound holes relative to the microphone assemblies define directional axes of the respective microphone assemblies.

2. The portable electronic apparatus according to Claim 1, wherein the two microphone assemblies are placed in a horizontally symmetrical manner with respect to a center of the housing.

3. The portable electronic apparatus according to Claim 1, wherein an angle between the two directional axes of the two microphone assemblies is in a range of 120 ± 30 degrees.

4. The portable electronic apparatus according to Claim 1, further comprising an acoustic resistance member installed outside a front face of the electret condenser microphone or inside or outside a rear face of the electret condenser microphone.

5. The portable electronic apparatus according to Claim 1, further comprising adjusting means which allows the two front sound holes of the microphone assemblies to be brought close to or moved away from each other.

6. The portable electronic apparatus according to Claim 5, wherein the adjusting means includes two long holes which extend in a direction of a straight line connecting the two microphone assemblies and two slide plates installed over the two long holes in a manner slidable in the direction of the straight line and provided with holes shorter than the long holes, and sets of the long hole and the short hole constitute the front sound holes.

7. The portable electronic apparatus according to Claim 1 or 5, further comprising deactivating means which deactivates one of the two microphone assemblies.

8. The portable electronic apparatus according to Claim 1 or 5, further comprising a microphone assembly for telephone conversations; and cancelling means which cancels out noise output from the two microphone assemblies and noise output from the microphone assembly for telephone conversations.
